# EUROPÄISCHE PATENTSCHRIFT

(11) **EP 0 950 569 B1**
(45) Veröffentlichungstag und Bekanntmachung des Hinweises auf die Patenterteilung: **25.07.2001**
(21) Anmeldenummer: 98103225.3
(22) Anmeldetag: 25.02.1998
(51) Int. Cl.: B60R 9/04

(54) **Befestigungsvorrichtung einer Fahrzeugdachreling**
Fastening device for a vehicle roof rail
Dispositif de fixation pour rail de toit pour véhicule

(43) Veröffentlichungstag der Anmeldung: 20.10.1999
(73) Patentinhaber: JAC Products Deutschland GmbH, 42285 Wuppertal (DE)
(72) Erfinder: Rothstein, Reinhold, Dr., 42279 Wuppertal (DE); Fisch, Fritz, 42111 Wuppertal (DE); Lumpe, Karl-Heinz, 45549 Sprockhövel (DE); Kolodziej, Klaus, 42329 Wuppertal (DE); Becker, Herbert, 42399 Wuppertal (DE); Höhne, Klaus, 42399 Wuppertal (DE)

(56) Entgegenhaltungen:
- DE-A- 2 939 671
- DE-A- 3 133 932
- DE-C- 3 121 086
- US-A- 3 724 730
- US-A- 4 277 009
- US-A- 5 699 944

## Beschreibung

Die Erfindung bezieht sich auf eine Befestigungsvorrichtung zum Befestigen eines sich auf dem Dachblech eines Kraftfahrzeugs abstützenden Stützfußes, insbesondere eines Stützfußes einer Dachreling, mit einem Befestigungsbolzen, der mit einem Endbereich in ein im Stützfuß ausgebildetes Sackloch eingreift und mit dem anderen, ein Außengewinde aufweisenden Endbereich eine mit einem Konus zusammenwirkende Spreizhülse und eine Bohrung in einem vom Dachblech überspannten Dachrahmen des Kraftfahrzeugs durchsetzt und daran mittels einer Gewindemutter festgelegt ist.

Bei einer Befestigungsvorrichtung der vorgenannten Art wie sie durch die DE 29 39 671 A1 bekanntgeworden ist, wird ein Bolzen eingesetzt, der einen im Durchmesser verdickten Bund aufweist, dessen Länge auf das Maß abgestimmt ist, welches im allgemeinen zwischen dem Dachrahmen und der sich gegen das obere Ende des Bundes abstützenden Auflagefläche des Aufbaus einzuhalten ist. Das Maß zwischen dem Dachrahmen und der Auflagefläche des Aufbaus wird vorgegeben durch den Abstand zwischen dem Dachrahmen und dem diesen überspannenden Dachblech des Fahrzeugs. In der Praxis ist es aber nun so, daß sich der Abstand zwischen dem Dachrahmen und dem Dachblech nicht immer innerhalb eines engen Toleranzbereichs einhalten läßt, was Probleme bei der Befestigung eines Aufbaus mit sich bringt. Wenn der Abstand zu gering ist, weist der Bund des Bolzens praktisch Übermaß auf, was zur Folge hat, daß die an der Auflagefläche des Aufbaus üblicherweise angeordnete Dichtung nicht zur dichtenden Anlage auf dem Dachblech des Fahrzeugs gelangt. Wenn andererseits der Abstand zu groß ist, ist die Länge des Bolzenbundes nicht mehr ausreichend, um zu verhindern, daß das Dachblech beim Verspannen des Aufbaus gegen den Dachrahmen eine das Erscheinungsbild des Fahrzeugs äußerst negativ beeinträchtigende Delle erhält. Ein weiterer Nachteil der bekannten Befestigungsvorrichtung ist darin zu sehen, daß sie einen vielteiligen Aufbau besitzt.

Eine demgegenüber verbesserte, allerdings auch einen vielteiligen Aufbau aufweisende Befestigungsvorrichtung ist in der DE 31 21 086 C2 gezeigt. Die Befestigungsvorrichtung weist einen Bolzen auf, der einendig mit einem Außengewinde zum Eindrehen in eine in einem Relingfuß ausgebildete Gewindebohrung und anderendig mit einem Außengewinde für eine den Bolzen am Dachrahmen festlegende Gewindemutter versehen ist. Der Bolzen weist einen Bund auf und ist mit einer Buchse ausgestattet, die in der Einbaulage vom Bolzen durchsetzt ist und die sich auf dem Dachrahmen abstützt. Bei dieser bekannten Befestigungsvorrichtung ist die Buchse als teleskopierbare Stellbuchse ausgebildet und besteht aus einer sich am Dachrahmen abstützenden Außenbuchse mit Innengewinde und einer darin drehbar und damit axial verschiebbar angeordneten, als Anschlag für den Bolzenbund dienenden Innenbuchse mit einem entsprechenden Außengewinde. Mit dieser bekannten Befestigungsvorrichtung lassen sich zwar Toleranzabweichungen durch axiales Verstellen der Innenbuchse ausgleichen, jedoch erscheint die Durchführung eines solchen Toleranzausgleichs sehr umständlich und verlangt auch den Einsatz von Lehren.

Bei derzeit eingesetzten Befestigungssystemen, die eine starre Verbindung der Dachreling und Dachrahmen im Fahrzeug aufweisen, können rohbaubedingte Karosserieschwankungen zwischen Dachhaut und Dachspriegel nicht aufgefangen werden. Durch eine unter dem Stützfuß angebrachte Unterlage aus einem kompressiblem Material kann der, durch die Rohbautoleranzen bedingte Spalt zwar optisch kaschiert werden. Nachteilig hierbei ist aber, daß zum einen eine nur geringe Toleranzbreite aufgefangen werden kann, zum anderen aufgrund der Dimensionierung und des Werkstoffes optische Einschränkungen das stilistische Erscheinungsbild der Reling am Fahrzeug negativ beeinträchtigen. Schwankungen über die gesamte Toleranzbreite haben zur Folge, daß beim Größtmaß durch die Komprimierung der Unterlage es zur Beulenbildung im Fahrzeugdach kommt, während beim Kleinstmaß ein Luftspalt zwischen Unterlage und Dachblech entsteht, dessen Folge Undichtigkeiten sind. Um die zuvor genannten Auswirkungen zu vermeiden, müssen bei der Montage der Dachreling alle Befestigungsbolzen am Fahrzeug auf das Abstandsmaß zwischen Dachblech und Dachrahmen in ihren Höhen neu eingestellt werden. Der damit verbundene Aufwand bei der Montage der Dachreling am Band, sowie die anderen Unzulänglichkeiten (optische Beeinträchtigung und Undichtigkeiten) sollen mit der vorliegenden Erfindung vermieden werden.

Demgemäß ist es Aufgabe der vorliegenden Erfindung, eine Befestigungsvorrichtung der eingangs genannten Art so zu gestalten, daß sich ein Toleranzausgleich auftretender Karosserietoleranzen schnell und einfach, insbesondere ohne aufwendige Einstellmanipulationen mit einfachen Mitteln realisieren läßt.

Zur Lösung dieser Aufgabe ist erfindungsgemäß vorgesehen, daß die Spreizhülse durch eine aus einer Schraubbetätigung der Gewindemutter resultierenden Axialverschiebung des Befestigungsbolzens innerhalb des Sacklochs aufspreizbar und gegen die Sacklochwandung anpreßbar ist.

Durch die erfindungsgemäßen Maßnahmen wird im Gegensatz zu den herkömmlichen Befestigungsvorrichtungen nunmehr der Befestigungsbolzen beim Anschrauben der Dachreling am Fahrzeugdach im Stützfuß verankert. Um die karosseriebedingten Schwankungen des Abstandsmaßes auffangen zu können, ist die Tiefe des Sacklochs auf die Größttoleranz ausgelegt. Die erfindungsgemäße Befestigungsvorrichtung besteht aus lediglich drei kostengünstig herzustellenden Teilen, nämlich einem Befestigungsbolzen, einer Spreizhülse und einer Gewindemutter. Durch die Erfindung ergibt sich für die Stützfußbefestigung aber insbesondere ein automatischer Toleranzausgleich, so daß die Notwendigkeit von Einstelloperationen entfällt. Für die Montage eines Stützfußes ist es lediglich erforderlich, den Befestigungsbolzen mit der Spreizhülse in das Sackloch im Stützfüß einzuschieben, den Stützfuß bis auf Anlage auf das Dachblech so aufzusetzen, daß der Bolzenschaft die Bohrungen im Dachblech und Dachrahmen durchsetzt und auf das Gewinde am freien Ende des Bolzenschafts eine Gewindemutter aufzuschrauben.

Zweckmäßige Ausgestaltungen und vorteilhafte Weiterbildungen der Erfindung sind in den Unteransprüchen angegeben.

Ausführungsbeispiele der Erfindung werden im folgenden anhand der Zeichnungen näher erläutert, und es zeigen:
- Fig. 1: den Dachbereich eines Kraftfahrzeugs mit darauf angeordneten Dachrelings,
- Fig. 2: einen Stützfuß einer Dachreling mit Befestigungsvorrichtung gemäß einer ersten Ausführungsform,
- Fig. 3: die Befestigungsvorrichtung nach Fig. 2 im vergrößerten Maßstab,
- Fig. 4: einen Stützfuß einer Dachreling mit Befestigungsvorrichtung gemäß einer zweiten Ausführungsform,
- Fig. 5: die Befestigungsvorrichtung nach Fig. 4 und
- Fig. 6: einen Schnitt durch den Befestigungsdom des Stützfußes nach Fig. 4.

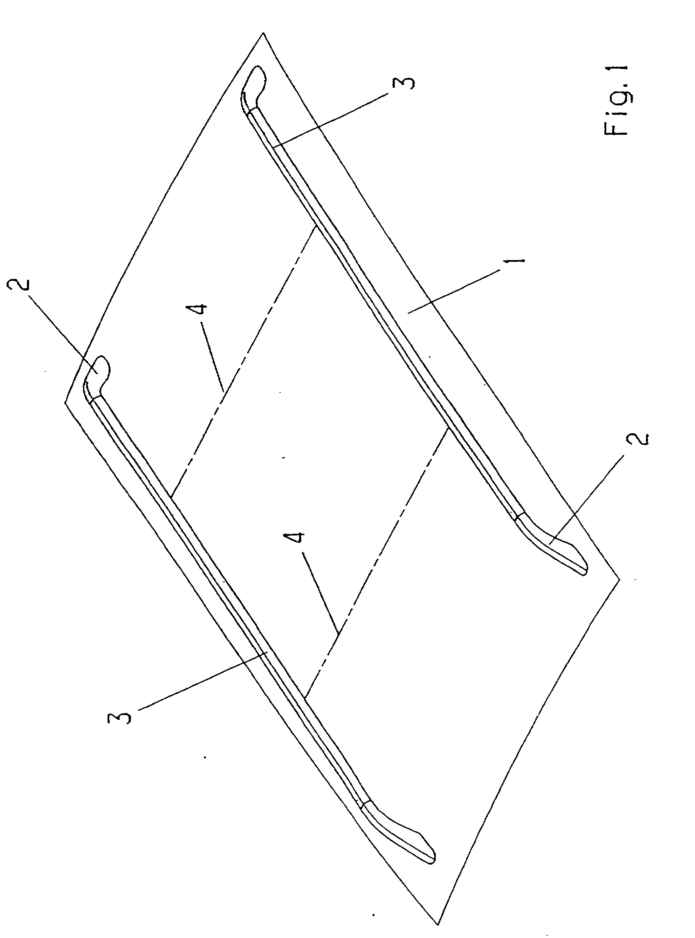

Fig. 1 läßt das Dachblech 1 eines Fahrzeugs mit einem darauf angeordneten Dachlastenträger erkennen. Der Dachlastenträger wird aus zwei Relings, bestehend aus Stützfüßen 2 und Holmen 3 sowie aus lediglich strichpunktiert angedeuteten Querträgern 4, die an den Holmen 3 befestigt sind, gebildet. Die Relings erstrecken sich zumindest annähernd parallel zueinander und verlaufen in Fahrtrichtung des Fahrzeugs.

Jeder Stützfuß 2 ist am Fahrzeugdach mittels einer Befestigungsvorrichtung festgelegt. Der Stützfuß 2 weist für die Befestigungsvorrichtung ein Sackloch 5 auf, das sich freiauslaufend durch einen Stützfußdom 6 erstreckt. Um karosseriebedingte Schwankungen des Abstandsmaßes zwischen Dachblech 1 und Dachrahmen 20 auffangen zu können, ist die Tiefe des Sacklochs 5 auf die Größttoleranz ausgelegt. Der Stützfuß 2 liegt über Zwischenlage einer Dichtung 7 auf dem Dachblech 1 auf, wobei der Stützfußdom 6 eine nicht näher dargestellte Öffnung im Dachblech 1 durchsetzt.

Die Befestigungsvorrichtung umfaßt einen Befestigungsbolzen 8, eine Spreizhülse 9 und eine Gewindemutter 10. Der Befestigungsbolzen 8 weist einen Bolzenkopf 11 und einen Bolzenschaft 12 auf. Zwischen dem Bolzenkopf 11 und dem Bolzenschaft 12 ist eine konische Übergangsstufe 13 ausgebildet. An die Übergangsstufe 13 schließt sich ein zylindrischer Axialbereich an, der über einen konischen Axialbereich in den Bolzenschaft 12 übergeht, welcher ein Außengewinde zum Aufschrauben der Gewindemutter 10 aufweist. Der Bolzenkopf 11 trägt einen axial überstehenden unrunden, wie quadratischen Ansatz 14, der formschlüssig in eine entsprechende unrunde Ausbildung im Endbereich des Sacklochs 5 eingreift.

Die Spreizhülse 9, die zweckmäßigerweise aus Metall besteht, ist mit freiauslaufenden Axialschlitzen 15 und mit einem sich auf dem Dachrahmen 20 abstützenden Flansch 16 ausgebildet und weist zudem eine Außenrändelung 17 oder dgl. zur verliersicheren Anordnung im Sackloch 5 des Stützfußes 2 auf. Zudem ist die Spreizhülse 9 an ihrem freien dem Flansch 16 abgewandten Ende mit einem nichtgezeigten Innenkonus oder einer Anfasung ausgebildet.

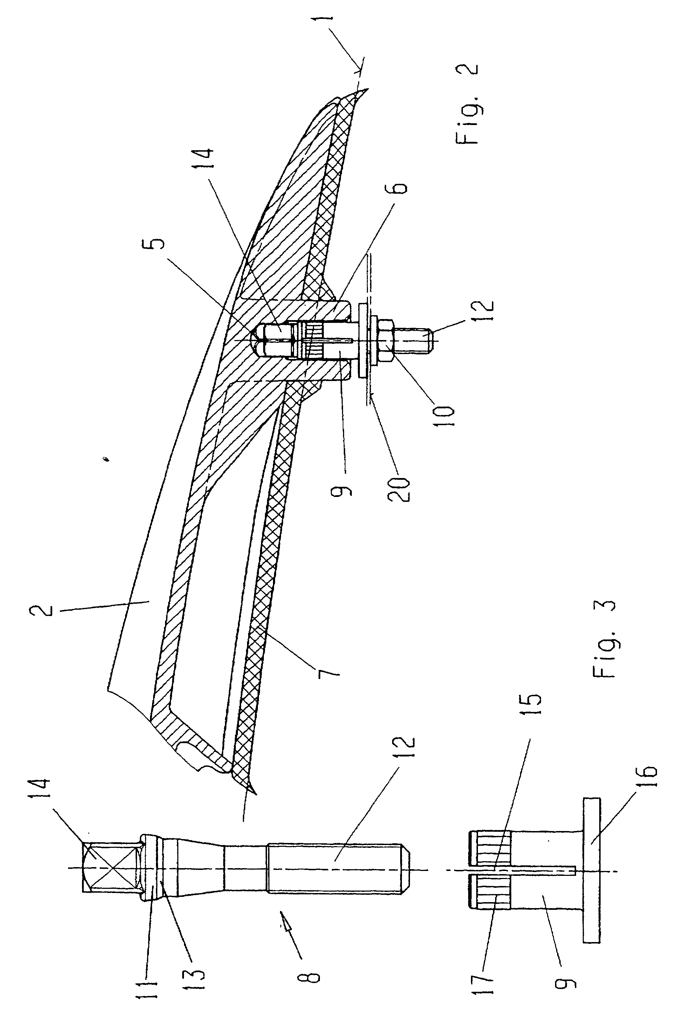

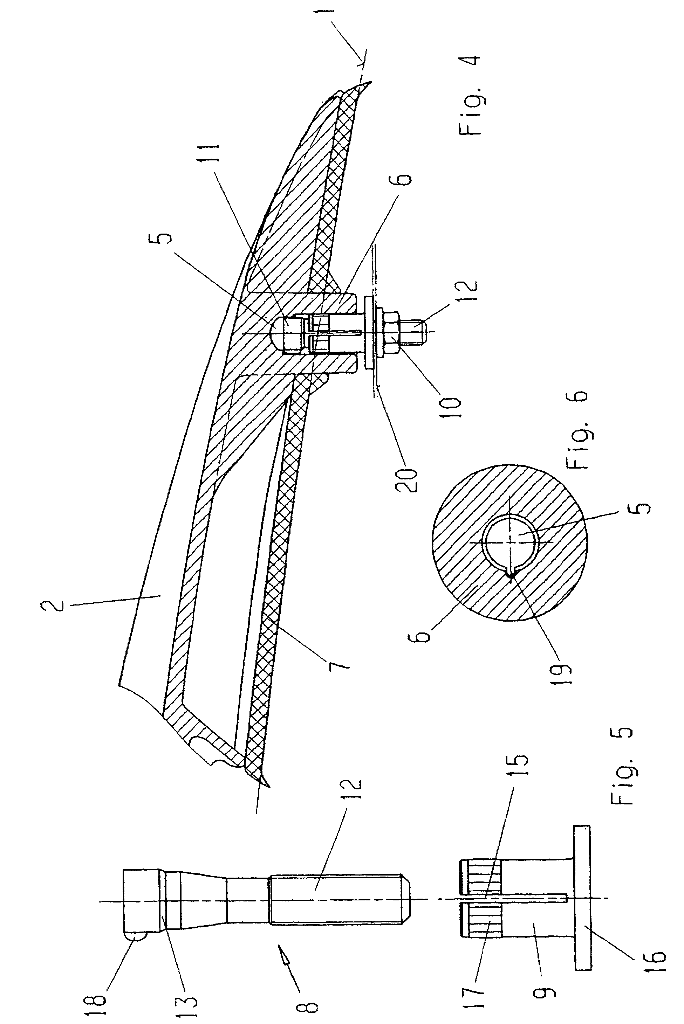

Während in Fig. 2 und 3 der Bolzenkopf 11 einen etwa quadratisch ausgeführten Ansatz 14 als Verdrehsicherung aufweist, trägt der Bolzenkopf 11 nach Fig. 4 und 5 eine radial überstehende Nase 18, die als Verdrehsicherung für den Befestigungsbolzen 8 in eine axial durchlaufende Radialnut 19 eingreift, welche eine Öffnungserweiterung des Sacklochs 5 ist.

Die Befestigungsvorrichtung, bestehend aus Befestigungsbolzen 8 und Spreizhülse 9 wird in das Sackloch 5 des Stützfußdoms 6 bis auf Anschlag eingeschoben. Dieser Zustand berücksichtigt das kleinstmögliche Abstandsmaß zwischen dem Dachblech und dem Dachrahmen 20. Beim Aufschrauben der Gewindemutter 10 wird der Befestigungsbolzen 8 nach unten gezogen. Hierbei setzt sich die Übergangsstufe 13 des Befestigungsbolzens 8 auf dem Kragen der Spreizhülse 9 ab und drückt diese nach unten bis der Flansch 16 der Spreizhülse 9 auf dem Dachrahmen 20 aufsteht. Den Weg, den die Spreizhülse zurücklegt, entspricht dem Weg, der erforderlich ist, um auf die kompremierbare Unterlage (Dichtung 7) unter dem Stützfuß 2 soweit zusammenzudrücken, daß die Abdichtung der Bohrung im Dachblech zum Innenraum gewährleistet wird. Durch Aufsetzen des Flanschs 16 der Spreizhülse 9 auf den Dachrahmen 20 wird die Übergangsstufe 13 am Bolzenkopf 11 überwunden und der Konus der Übergangsstufe 13 gleitet auf den Innenkonus der Spreizhülse 9 und preßt die durch die Axialschlitze 15 gebildeten, beweglichen Schenkel des Spreizhülse an die Innenwandung des Sacklochs 5 im Stützfußdom 6, wodurch eine Verankerung des Befestigungssystems im Stützfuß 2 erreicht wird. Damit ist die Montage äußerst schnell und einfach durchzuführen mit der Besonderheit eines automatischen Toleranzausgleichs.

## Patentansprüche

1. Befestigungsvorrichtung zum Befestigen eines sich auf dem Dachblech (1) eines Kraftfahrzeugs abstützenden Stützfußes (2), insbesondere eines Stützfußes (2) einer Dachreling, mit einem Befestigungsbolzen (8), der mit einem Endbereich in ein im Stützfuß (2) ausgebildetes Sackloch (5) eingreift und mit dem anderen, ein Außengewinde aufweisenden Endbereich eine mit einem Konus zusammenwirkende Spreizhülse (9) und eine Bohrung in einem vom Dachblech (1) überspannten Dachrahmen (20) des Kraftfahrzeugs durchsetzt und daran mittels einer Gewindemutter (10) festgelegt ist, dadurch gekennzeichnet, daß die Spreizhülse (9) durch eine aus einer Schraubbetätigung der Gewindemutter (10) resultierenden Axialverschiebung des Befestigungsbolzens (8) innerhalb des Sacklochs (5) aufspreizbar und gegen die Sacklochwandung anpreßbar ist.

2. Befestigungsvorrichtung nach Anspruch 1, dadurch gekennzeichnet, daß der Befestigungsbolzen (8) einen Bolzenkopf (11) mit einer konischen Übergangsstufe (13) zum Bolzenschaft (12) hin aufweist und daß das freie, der Gewindemutter (10) abgewandte Ende der mit frei auslaufenden Axialschlitzen (15) versehenen Spreizhülse (9) in der nichtgespreizten Ausgangslage an der Übergangsstufe (13) anliegt und mit einem Innenkonus oder einer Anfasung ausgebildet ist.

3. Befestigungsvorrichtung nach Anspruch 1 oder 2, dadurch gekennzeichnet, daß die Spreizhülse (9) mit einem auf dem Dachrahmen (20) abstützbaren Flansch (16) ausgebildet ist.

4. Befestigungsvorrichtung nach wenigstens einem der Ansprüche 1 bis 3, dadurch gekennzeichnet, daß die Spreizhülse (9) eine Außenrändelung (17) oder dgl. zur verliersicheren Anordnung im Sackloch (5) aufweist.

5. Befestigungsvorrichtung nach wenigstens einem der Ansprüche 1 bis 4, dadurch gekennzeichnet, daß der Befestigungsbolzen (8) verdrehfest in dem im Stützfuß (2) ausgebildeten Sackloch (5) angeordnet ist.

6. Befestigungsvorrichtung nach wenigstens einem der Ansprüche 1 bis 5, dadurch gekennzeichnet, daß am Sacklochende ein unrunder wie viereckiger Öffnungsquerschnitt ausgebildet ist, in den ein axial überstehender Ansatz (14) am Bolzenkopf (11) formschlüssig eingreift.

7. Befestigungsvorrichtung nach wenigstens einem der Ansprüche 1 bis 5, dadurch gekennzeichnet, daß das Sackloch (5) eine axial durchlaufende Radialnut (19) aufweist, in die eine am Bolzenkopf (11) sitzende Nase (18) eingreift.

## Claims

1. Fastening device for the fastening of a supporting foot (2) supported on the roof panel (1) of a motor vehicle, in particular a supporting foot (2) of a roof rail, having a fastening bolt (8) which, with one end region, engages in a blind hole (5) formed in the supporting foot (2) and, with the other end region which has an external thread, passes through an expanding sleeve (9), which interacts with a cone, and a drilled hole in a roof frame (20) of the motor vehicle, which roof frame is spanned by the roof panel (1), and is secured thereto by means of a threaded nut (10), characterized in that the expanding sleeve (9) can be expanded by axial displacement of the fastening bolt (8) within the blind hole (5), said axial displacement resulting from screwing actuation of the threaded nut (10), and can be pressed against the blind-hole wall.

2. Fastening device according to Claim 1, characterized in that the fastening bolt (8) has a bolt head (11) with a conical transitional step (13) towards the bolt shank (12), and in that the free end, facing away from the threaded nut (10), of the expanding sleeve (9), which is provided with axial slots (15) opening out freely, bears, in the non-expanded initial position, against the transitional step (13) and is formed with an internal cone or a bevel.

3. Fastening device according to Claim 1 or 2, characterized in that the expanding sleeve (9) is formed with a flange (16) which can be supported on the roof frame (20).

4. Fastening device according to at least one of Claims 1 to 3, characterized in that the expanding sleeve (9) has an external knurling (17) or the like for the captive arrangement in the blind hole (5).

5. Fastening device according to at least one of Claims 1 to 4, characterized in that the fastening bolt (8) is arranged in a twist-proof manner in the blind hole (5) formed in the supporting foot (2).

6. Fastening device according to at least one of Claims 1 to 5, characterized in that a non-round or four-cornered opening cross section is formed at the end of the blind hole and an axially protruding projection (14) on the bolt head (11) engages therein in a positive-locking manner.

7. Fastening device according to at least one of Claims 1 to 5, characterized in that the blind hole (5) has a radial groove (19) running axially through it in which a lug (18) seated on the bolt head (11) engages.

## Revendications

1. Dispositif de fixation pour la fixation d'un pied de support (2) s'appuyant sur le panneau de toit (1) d'un véhicule à moteur, en particulier d'un pied de support (2) d'un rail de toit, comprenant un boulon de fixation (8) qui vient en engagement, avec une partie d'extrémité, dans un trou borgne (5) formé dans le pied de support (2) et qui, avec l'autre partie d'extrémité présentant un filetage extérieur, traverse une douille d'expansion (9) coopérant avec un cône, et un alésage dans un cadre de toit (20) du véhicule à moteur, recouvert par le panneau de toit (1), et est fixé à celui-ci au moyen d'un écrou fileté (10), caractérisé en ce que la douille d'expansion (9) peut être écartée à l'intérieur du trou borgne (5) par un déplacement axial du boulon de fixation (8) résultant d'une action de vissage de l'écrou fileté (10) et peut être pressée contre la paroi du trou borgne.

2. Dispositif de fixation selon la revendication 1, caractérisé en ce que le boulon de fixation (8) présente une tête de boulon (11) avec un gradin de transition conique (13) vers la tige du boulon (12), et en ce que l'extrémité libre opposée à l'écrou fileté (10) de la douille d'expansion (9) pourvue de fentes axiales (15) sortant librement, s'appuie dans la position de départ non écartée contre le gradin de transition (13) et est formée avec un cône interne ou un biseautage.

3. Dispositif de fixation selon la revendication 1 ou 2, caractérisé en ce que la douille d'expansion (9) est formée avec une bride (16) pouvant s'appuyer sur le cadre de toit (20).

4. Dispositif de fixation selon au moins l'une quelconque des revendications 1 à 3, caractérisé en ce que la douille d'expansion (9) présente une bordure extérieure (17) ou similaire destinée à un positionnement sans risque de la perdre dans le trou borgne (5).

5. Dispositif de fixation selon au moins l'une quelconque des revendications 1 à 4, caractérisé en ce que le boulon de fixation (8) est disposé fixe en rotation dans le trou borgne (5) formé dans le pied de support (2).

6. Dispositif de fixation selon au moins l'une quelconque des revendications 1 à 5, caractérisé en ce qu'une section transversale d'ouverture non arrondie, comme par exemple carrée, est formée à l'extrémité du trou borgne, dans laquelle ouverture un épaulement saillant axialement (14) s'engage par engagement positif sur la tête du boulon (11).

7. Dispositif de fixation selon au moins l'une quelconque des revendications 1 à 5, caractérisé en ce que le trou borgne (5) présente une rainure radiale (19) s'étendant axialement, dans laquelle s'engage un nez (18) reposant sur la tête de boulon (11).
